# EUROPEAN PATENT SPECIFICATION

(11) **EP 2 215 390 B1**
(45) Date of publication and mention of the grant of the patent: **27.09.2017**
(21) Application number: 08848342.5
(22) Date of filing: 29.10.2008
(51) Int. Cl.: F16K 31/165

(54) **ROTARY VALVE LEVER APPARATUS HAVING INTERCHANGEABLE SHAFT ADAPTOR INSERTS**
HEBELVORRICHTUNG FÜR DREHVENTIL MIT AUSTAUSCHBAREN SCHAFTADAPTEREINSÄTZEN
APPAREIL DE LEVIER DE SOUPAPE ROTATIF AYANT DES INSERTS D'ADAPTATEUR D'ARBRE INTERCHANGEABLES

(30) Priority: 07.11.2007 US 936561
(43) Date of publication of application: 11.08.2010
(73) Proprietor: Fisher Controls International LLC, St. Louis, MO 63136 (US)
(72) Inventor: MILLER, Jerry, L., Marshalltown IA 50158 (US); BECKMAN, Dennis, V., Marshalltown IA 50158 (US)
(74) Representative: Bohnenberger, Johannes
(86) International application number: PCT/US2008/081547
(87) International publication number: WO 2009/061646

(56) References cited:
- WO-A-98/49481
- GB-A- 2 136 541
- US-A- 1 990 990
- US-A- 2 380 952
- US-A- 5 887 608
- US-A1- 2005 274 416

## Description

### FIELD OF THE DISCLOSURE

This disclosure relates generally to control valves and, more particularly, to rotary valve actuation lever apparatus having interchangeable shaft adaptor inserts.

### BACKGROUND

Process control plants or systems often employ rotary valves, such as ball valves, butterfly valves, eccentric-disk valves, eccentric-plug valves, etc., to control the flow of process fluids. In general, rotary valves typically include a fluid flow control member disposed in the fluid path and rotatably coupled to the body of the rotary valve via a shaft. Typically, a portion of the shaft extending from the rotary valve is operatively coupled to a stem of an actuator (e.g., a pneumatic actuator, an electric actuator, a hydraulic actuator, etc.) of the rotary control valve.

To couple the actuator stem to the valve shaft, a lever or lever arm is typically employed. The lever converts a linear displacement of the actuator stem into a rotational displacement of the valve shaft. Thus, rotation of the lever causes the valve shaft and the flow control member (e.g., a disk, a ball, etc.) to rotate to increase or restrict the flow of fluid through the valve. In operation, a controller may be used to control the displacement of the actuator stem to rotate the lever and the valve shaft and, thus, the flow control member of the valve to a desired angular position to achieve a desired fluid flow through the rotary valve.

Many known valve shafts provide a splined end for connection to an actuator via, for example, a lever as described above. Splined shafts provide a connection to evenly distribute torque load and prevent slippage or lost motion, which can improve throttling performance of a valve. While many valve shafts employ a splined connection, many other valve shafts have an end portion providing a different geometry such as, for example, a square end portion, a double-D end portion, a keyed end portion, etc.

In cases where a lever arm or lever is used to couple a linear actuator stem to a rotary valve shaft, the lever is typically specifically configured to receive an end of the valve shaft (i.e., a square valve shaft requires a lever configured to receive a square valve shaft). Thus, different levers are often required to couple to valve shafts having differently shaped ends such as those described above. The need for a number of different levers to couple to the various types of valve shafts can significantly increase manufacturing and inventory costs. US 2005/0274416 A discloses a lever apparatus for use with a rotary control valve comprising: a lever arm to be rotatably mounted to a stem; a first opening; and a second opening adjacent the first opening. US 1,990,990 represents further prior art.

### SUMMARY

In the invention of claim 1 a lever apparatus for use with a rotary control valve includes a lever arm to rotatably mount to a stem of an actuator. The lever apparatus further includes a first opening having a first splined inner surface to receive a splined valve shaft and a second opening adjacent the first opening and having a second splined inner surface to receive at least a portion of an insert member having a splined outer surface. The second opening has a larger diameter than the first opening,

In another example, a rotary control valve apparatus includes a housing and a valve mounted to the housing and having a shaft. An actuator member is disposed within the housing. There is a lever apparatus of the invention included.

### BRIEF DESCRIPTION OF THE DRAWINGS

FIG. 1A is a cross-sectional illustration of a known rotary control valve assembly.
FIG. 1B is a cross-sectional view of a known rotary valve that may be used to implement the rotary control valve assembly of FIG. 1A.
FIG. 1C is an enlarged cross-sectional view of the example rotary control valve assembly of FIG. 1A, as viewed along line A-A of FIG. 1A.
FIG. 2A is a perspective view of an example lever apparatus described herein.
FIG. 2B illustrates another view of the example lever apparatus of FIG. 2A.
FIG. 3 is a perspective view of an example splined valve shaft.
FIG. 4A is a perspective view of an example insert member having a cylindrically-shaped body.
FIG. 4B is a perspective view of another example insert member having a conically-shaped body.
FIG. 5 is a cross-sectional view of a portion of an example rotary control valve assembly similar to that shown in FIGS. 1A, 1B and 1C, but implemented with the example lever apparatus of FIGS. 2A and 2B.

### DETAILED DESCRIPTION

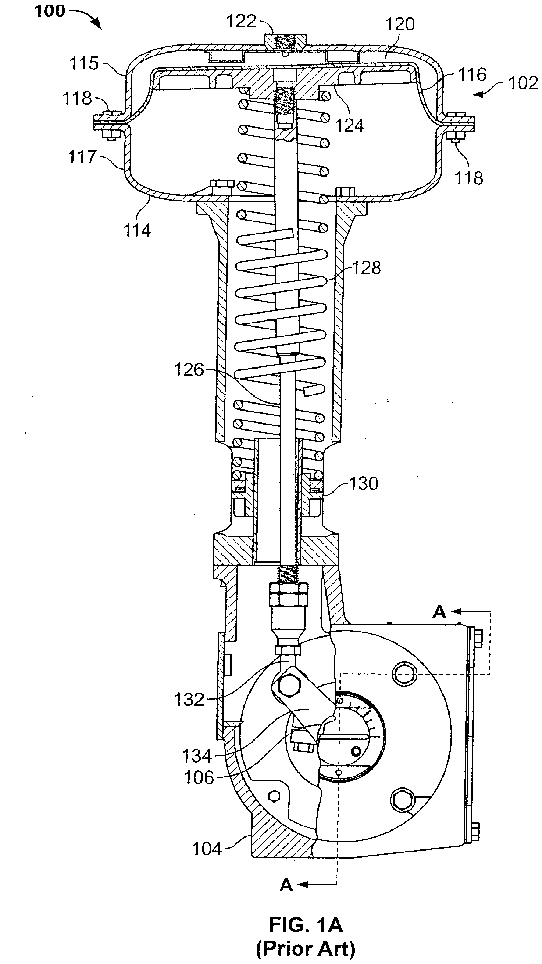

In general, the example lever apparatus described herein can be used with rotary control valves. Known lever arms or levers such as, for example, the lever 106 shown in FIG. 1A, are configured to receive (i.e., be coupled to) one type of valve shaft (e.g., a splined or a stub shaft). Manufacturing a number of different levers may be necessary to enable different actuators to be coupled to various valves having different shaft types such as, for example, a square stub shaft, a keyed stub shaft, etc. However, having to manufacture a relatively large number of different levers increases manufacturing and inventory costs.

In contrast to known lever arms or levers, the example lever apparatus described herein can couple to various or multiple types of valve shafts. In particular, the example lever apparatus described herein can receive either a splined valve shaft or, alternatively, a square stub shaft, a double-D stub shaft, a keyed stub shaft, etc. via an insert member or shaft adaptor that adapts the lever to receive the shafts.

Rotatably coupling a lever to a splined valve shaft can prevent slippage or lost motion, which can otherwise occur when a lever is connected to a non-splined shaft, thereby improving throttling performance of the valve. Furthermore, the example lever apparatus described herein reduces manufacturing and inventory costs by eliminating the need to manufacture and inventory various types of levers configured to receive various types of valve shafts such as those described herein.

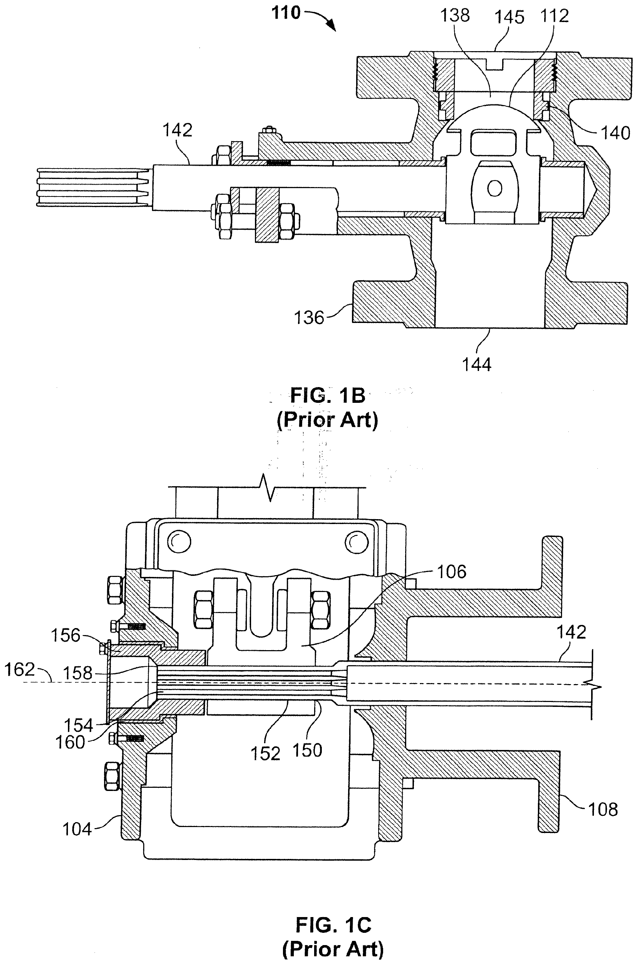

Before describing the example lever apparatus in greater detail, a brief description of a known rotary control valve assembly 100 is provided below in connection with FIGS. 1A, 1B and 1C. FIG. 1A is a cross-sectional view of the known rotary control valve assembly 100 and FIG. 1B is cross-sectional view of an example rotary valve 110 that may be used to implement the rotary control valve assembly 100 of FIG. 1A. FIG. 1C illustrates an enlarged cross-sectional view of a portion of the rotary control valve assembly 100 of FIG. 1A depicting the example lever 106 as viewed along line A-A of FIG. 1A.

Referring in detail to FIGS. 1A, 1B and 1C, the rotary control valve assembly 100 includes an actuator 102 (e.g., a diaphragm actuator, a piston actuator, etc.) coupled to a housing of the rotary control valve. The housing 104 contains the lever 106 and includes a mounting yoke 108 that couples the rotary valve 110 to the rotary control valve assembly 100. The actuator 102 is operatively coupled to the rotary valve 110 via the lever 106 to operate a flow control member or throttling member 112 (e.g., a ball, a disk, a plug,. etc.) of the rotary valve 110.

The actuator 102 includes a casing 114 that captures a diaphragm 116 between an upper casing portion 115 and a lower casing portion 117. The casing portions 115 and 117 are coupled together with a plurality of threaded fasteners 118 spaced along an outer edge of the casing 114. The diaphragm 116 separates the space within the casing 114 into a control pressure chamber 120 through which a controlled pressure is supplied via an inlet port 122 to displace the diaphragm 116. A diaphragm plate 124 provides a rigid backing for the diaphragm 116 and couples the diaphragm 116 to an actuator stem or rod 126 (e.g., via threads). An actuator spring 128 surrounds the actuator stem 126 and is positioned between the diaphragm plate 124 and a spring seat 130. The spring 128 provides a biasing force against the diaphragm plate 124 to return the actuator stem 126 and the flow control member 112 or other operator coupled to the actuator stem 126 to a known position in the absence of a control pressure applied to the diaphragm 116. The actuator stem 126 may include a rod end bearing 132 to rotatably couple the actuator stem 126 to a lever arm 134 of the lever 106. The housing 104 of the rotary control valve assembly 100 contains the lever 106 and, as most clearly shown in FIG. 1C, the mounting yoke 108 of the housing 104 couples the rotary valve 110 to the rotary control valve assembly 100.

Referring to FIG. 1B, the rotary valve 110 includes a valve body 136 that houses the flow control member 112 and an orifice 138 having a seating surface or seal ring 140. The flow control member 112 is coupled to a valve shaft 142 which, in turn, is coupled to the lever 106. The flow control member 112 engages the seal ring 140 to control the flow of fluid through the orifice 138 via which fluid may flow from an inlet passage 144 to an outlet passage 145. Thus, the rate of fluid flow through the rotary valve 110 is controlled by the position of the flow control member 112 relative to the seal ring 140. The position of the flow control member 112 may be varied from a closed position at which the flow control member 112 is in sealing engagement with the seal ring 140 to a fully open or maximum flow rate position at which the flow control member 112 is away from the seal ring 140.

As discussed above, the position of the flow control member 112 is controlled by the actuator 102 via the lever 106, which is coupled to the valve shaft 142. As most clearly shown in FIG. 1C, the lever 106 includes an aperture 150 having a splined inner surface 152 to receive the splined valve shaft 142. An end 154 of the splined valve shaft 142 is also received by a hub 156 that may have a splined inner surface 158. The hub 156 is rotatably mounted to the actuator housing 104 via a bushing 160 so that the hub 156, the valve shaft 142, and the lever 106 can rotate relative to the actuator housing 104 about an axis 162.

In operation, the rotary control valve assembly 100 receives a control signal such as, for example, compressed air in the control pressure chamber 120 via the inlet port 122. The compressed air displaces the diaphragm 116 and the diaphragm plate 124 against the spring 128. The displacement of the diaphragm 116 results in a corresponding linear displacement of the actuator stem 126. The linear displacement of the actuator stem 126 is converted into a rotational displacement of the lever 106, whereby rotation of the lever 106 causes the valve shaft 142 and the fluid control member 112 to rotate to a desired angular position to vary or control the fluid flowing through the rotary valve 110.

Although the rotary control valve assembly 100 of FIG. 1A is illustrated as using a pneumatic actuator (i.e., the actuator 102), the example rotary control valve assembly 100 may use any other style of actuator such as, for example, an electric actuator, a hydraulic actuator, etc. Likewise, although the flow control member 112 is illustrated as an eccentric-plug valve in FIG. 1B, the flow control member 112 may be implemented using any type of valve such as, for example, a butterfly valve, a ball valve, an eccentric-disk valve etc. that can be rotated by a rotary control valve, such as, for example, the rotary control valve assembly 100.

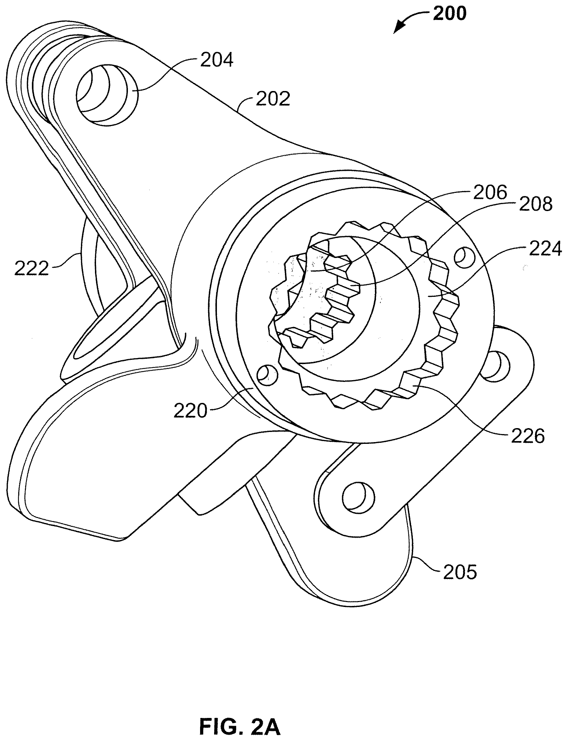

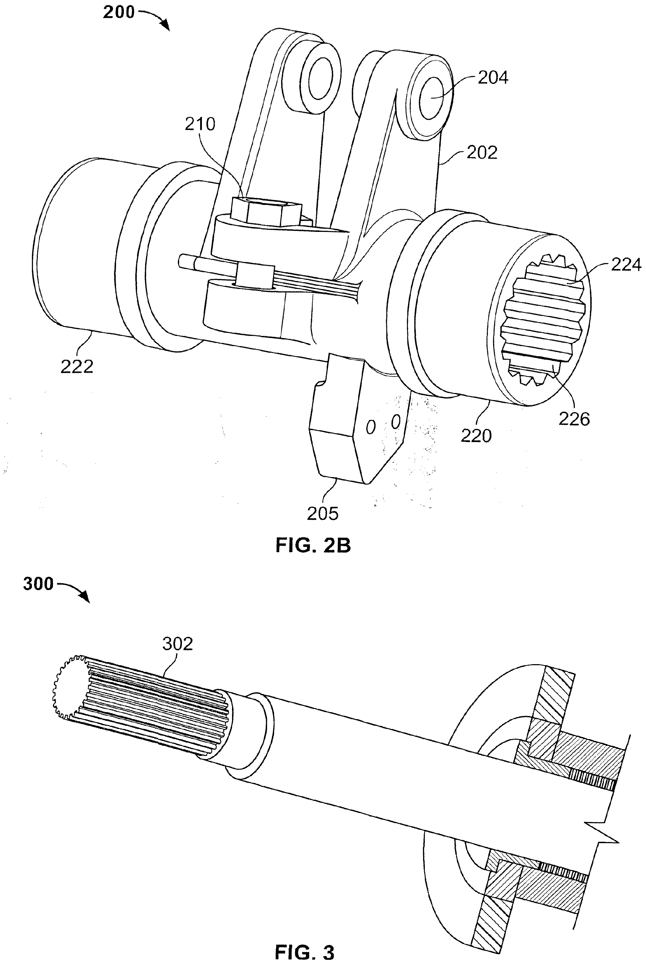

FIGS. 2A and 2B illustrate an example lever apparatus 200 described herein. As discussed above, the example lever apparatus described herein can receive either a splined valve shaft which is clamped via a bolt and slot to provide a substantially tight fit or clearance fit or, alternatively, a square stub shaft, a double-D stub shaft, a keyed stub shaft, etc. via an insert member or shaft adaptor that adapts the lever to receive the shafts.

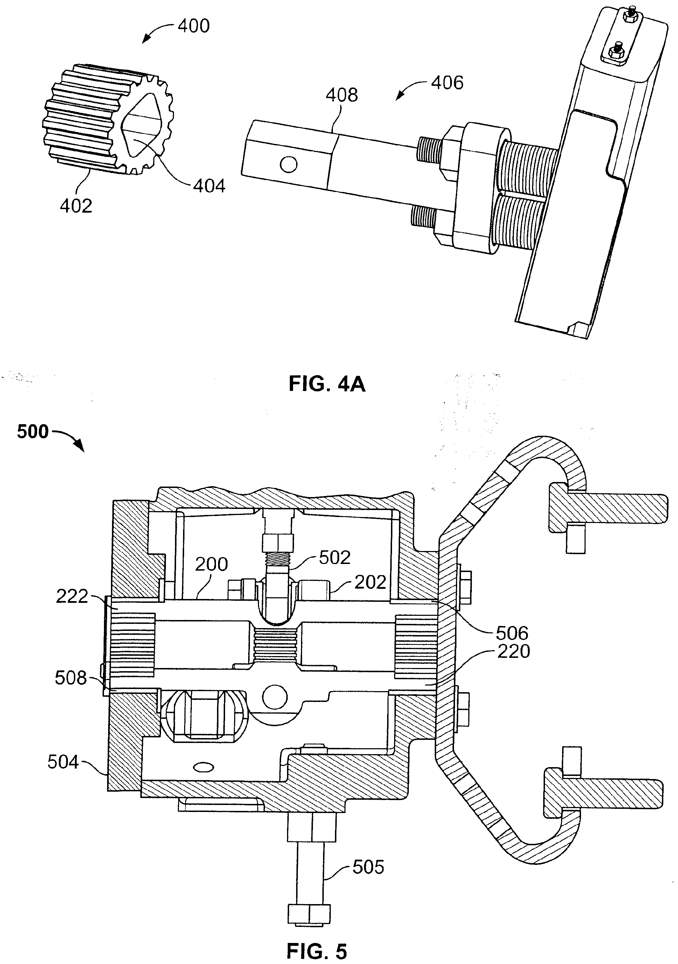

The lever 200 includes a lever arm 202 having an aperture or mounting hole 204 therethrough to rotatably couple the lever 200 to an actuator stem or rod 502 (FIG. 5). The example lever 200 may be operatively coupled to the actuator stem 502 via bolted clevis bearings or any other suitable fastening mechanism(s) via the mounting hole 204. The lever 200 may also include a stop arm 205 that engages a travel stop 505 (e.g., a screw) (FIG. 5) to limit the rotational travel of the lever 200 and, thus, the rotational position of a flow control member (e.g., the flow control member 112).

The lever 200 can have an opening or aperture 206 substantially near the center of the lever 200. The opening or aperture 206 may include a splined inner surface 208 to receive and/or mate with a splined valve shaft such as, for example, a valve shaft 300 depicted in FIG. 3. The lever 200 may include a fastener or clamping screw 210 that, when tightened, can clamp the lever 200 to a splined shaft such as, for example, the spline shaft 300 of FIG. 3 to provide a substantially tight fit or clearance fit between the lever and shaft.

The example lever apparatus 200 may also include a first end 220 and a second end 222. Each of the first 220 and the second 222 ends may include an opening or aperture 224 having a diameter that is larger than the diameter of the opening or aperture 206. The opening or aperture 224 can have a splined inner surface 226 to receive and/or mate with at least a portion of an insert member or shaft adaptor 400 of FIG. 4A discussed below.

The example lever apparatus 200 may be made of various materials such as steel, aluminum, or any other suitable material and formed via any process(es) such as, for example, machining, injection molding, etc. The splined inner surfaces 208 and 226 may be parallel keyed splines, involute splines, crown splines, serrations, etc., and may be formed via broaching, shaping, etc., or any other suitable process(es).

As discussed above, FIG. 3 illustrates an example valve shaft that can couple to the example lever 200. The valve shaft 300 includes a splined end portion 302 that is inserted and/or mates with the splined inner surface 208 of the lever 200 to rotatably couple the lever 200 to the valve shaft 300. The valve shaft 300 is illustrated by way of example in FIG. 3 as a clamped spline shaft. However, in other example implementations, the valve shaft 300 may be any shaft having a splined portion.

FIG. 4A illustrates the example insert member or shaft adaptor 400 that can couple a valve shaft having a square shaft, a double-D shaft, etc. to the example lever apparatus 200. The opening or aperture 224 of the first 220 and/or second 222 ends of the lever 200 may receive at least a portion of the insert member or shaft adaptor 400. However, in other example implementations, the opening or aperture 206 of the lever 200 can receive at least a portion of the insert member or shaft adaptor 400.

The example insert member or shaft adaptor 400 illustrated in FIG. 4A includes a cylindrically-shaped splined outer surface 402 and an opening or aperture 404. The opening or aperture 404 of the insert member 400 couples the insert member 400 to a valve shaft 406. As illustrated by way of example in FIG. 4A, the opening or aperture 404 of the insert member 400 can receive the valve shaft 406 which is depicted as having a square end portion 408. However, in other example implementations, the opening or aperture 404 of the insert member 400 can be sized and/or shaped to receive a valve shaft having a shaft end portion such as, for example, a double-D stub shaft, a keyed stub shaft, etc. In the illustrated example, the end portion 408 of the valve shaft 406 slides into the opening or aperture 404 to couple the valve shaft 406 to the insert member 400. However, in other example implementations, the insert member 400 can couple to a valve shaft (i.e., the valve shaft 406) via mechanical fasteners or any other suitable fastening mechanism(s).

In the example illustration, at least a portion of the insert member or shaft adaptor 400 is inserted into the recessed opening or aperture 224 of the first end 220 of the lever 200. The splined outer surface 402 of the insert member 400 mates with and/or engages the splined inner surface 226 of the recessed opening or aperture 224 of the lever 200 to couple the insert member 400 and the valve shaft 406 to the lever 200 such that rotation of the lever 200 rotates the valve shaft 406 and, thus, a flow control member (e.g., the flow control member 112) of a rotary valve.

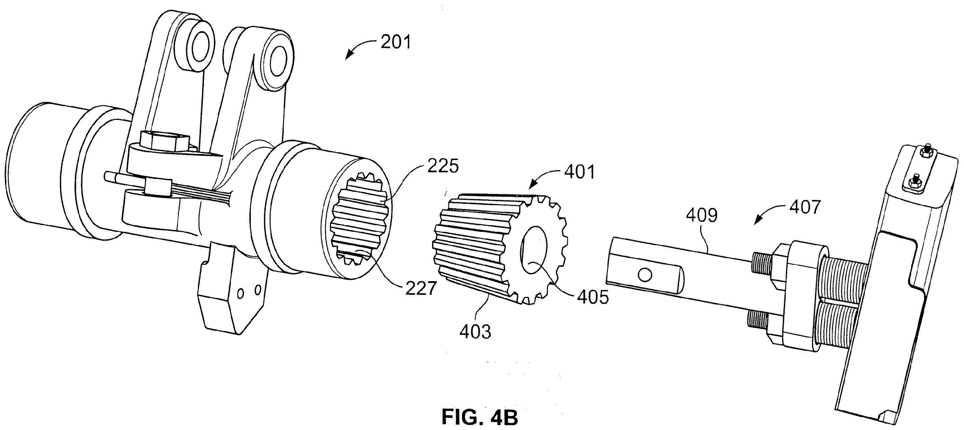

FIG. 4B illustrates another example lever apparatus 201 that can receive an insert member or shaft adaptor 401 having a conically-shaped splined outer surface 403. The insert member 401 may have an opening or aperture 405 to receive a valve shaft 407 having a shaft end portion 409 such as, for example, a double-D stub shaft, a keyed stub shaft, etc. The insert member 401 may be press fit and/or inserted into a second opening or aperture 225 of the lever 201. A splined inner surface 227 of the opening or aperture 225 of the lever 201 may be conically-shaped to mate with and/or receive the conically-shaped outer surface 403 of the insert member 401. The conically-shaped outer surface 403 provides a greater effective surface area when coupled with the lever 201 to provide a tight connection and, in particular, can be advantageous when used in conditions that require a high operating torque application to open or close a flow control member of a valve.

The insert members 400 and 401 may be made of various materials such as steel, aluminum, or any other suitable material and manufactured via any process(es) such as, for example, machining, injection molding, etc., or other suitable forming process(es). The splines of the outer surfaces 402 and 403 may be configured as parallel keyed splines, involute splines, crown splines, serrations, etc., and may be formed via broaching, milling, hobbing, etc. or any other suitable process(es).

FIG. 5 is a cross-sectional view of a portion of an example rotary control valve assembly 500 that is substantially similar to the rotary control valves assembly 100 of FIGS. 1A, 1B and 1C, but implemented with the example lever apparatus 200 of FIGS. 2A and 2B. The description of those components of FIG. 5 similar or identical to those of FIGS. 1A, 1B and 1C is not repeated and the interested reader may refer to the description of FIGS. 1A, 1B and 1C for details relating to those components. In other example implementations, the example lever 201 and the insert member 401 of FIG. 4B can be interchanged with the example lever 200 and insert member 400 of FIG. 4A and implemented with the example rotary control valve assembly 500 of FIG. 5 substantially similar to the lever 200 and the insert member 400.

Referring to FIG. 5, the lever arm 202 operatively couples the lever 200 to an actuator stem 502. In turn, the lever 200 is operatively coupled to a valve shaft, such as, for example, the valve shaft 300 (FIG. 3) or the valve shaft 406 (FIG. 4A) via either configurations shown by way of example in FIG. 3 and FIG. 4A (i.e., a splined valve shaft coupled to the lever 200 as shown by way of example in FIG. 3 or, alternatively, a square shaft coupled to the lever 200 via the insert member 400 as shown by way of example in FIG. 4A). The first end 220 and the second end 222 of the lever 200 can be rotatably coupled to a housing 504 of an actuator (e.g., the actuator 102) via bushings 506 and 508, respectively, so that the lever 200 and the valve shaft 300 or 406 can rotate relative to the housing 504.

In operation, the rotary control valve assembly 500 receives a control signal such as, for example, compressed air, to displace a diaphragm (e.g., the diaphragm 116 of FIG. 1A) that results in a corresponding displacement of the actuator stem 502. The displacement of the actuator stem 502 causes the lever 200 to rotate. Rotation of the valve shaft 300 or, alternatively, the valve shaft 406, causes a flow control member (e.g., the flow control member 112 of FIG.1B) to rotate to vary or control the flow of fluid through a rotary valve (e.g., the rotary valve 110 of FIG. 1B). The adjustable stop 505 can be adjusted to engage the lever stop 205 (FIG. 2A) to limit the rotational travel of the lever 200. When the flow control member is closed, the flow control member is typically configured to engage a seal ring (e.g., the seal ring 140 of FIG. 1B) that encircles the flow path through the rotary valve to prevent the flow of fluid through the valve.

When the lever 200 is connected to the valve shaft 300, the splines 208 of the lever 200 engage the splines 302 of the valve shaft 300. This clamped spline connection enables the lever 200 to rotate the valve shaft without slippage or lost motion, which improves throttling performance of the valve. Similarly, when the lever 200 is connected to the valve shaft 406 via the insert member or shaft adaptor 400, the splines 226 engage the splines 402 with a gradual interference fit to minimize slippage or lost motion and improve throttling performance of the valve as the lever 200 rotates the valve shaft 406

The example lever apparatus described herein can advantageously receive a splined valve shaft or, alternatively, an insert member or shaft adaptor that adapts the lever to receive a square shaft, a double-D shaft, a keyed shaft, etc. In this manner, the example lever apparatus described herein eliminates the need to manufacture and inventory various types of levers configured to receive various types of valve shafts such as those described herein, which may reduce manufacturing and inventory costs. The invention is defined by appended claims only.

## Claims

1. A lever apparatus (200) for use with a rotary control valve, comprising:
a lever arm (202) to be rotatably mounted to a stem (502) of an actuator;
a first opening (206) having a first splined inner surface (208) to receive a splined valve shaft 300; and
a second opening (224, 225) adjacent the first opening and having a second splined inner surface (226, 227) to receive at least a portion of an insert member (400, 401) having a splined outer surface (402, 403), wherein the second opening (224, 225) has a larger diameter than the first opening (206)

2. A lever apparatus as defined in claim 1, comprising a splined valve shaft (302), wherein the splined valve shaft (302) is received in the first opening (206) having a substantially tight fit or clearance fit.

3. A lever apparatus as defined in claim 2, wherein a clamping means provides the substantially tight fit or clearance fit between the splined valve shaft (302) and the first opening (206).

4. A lever apparatus as defined in claim 1, comprising an insert member (400), wherein the insert member has a cylindrically-shaped body.

5. A lever apparatus as defined in claim 1, wherein the lever apparatus further comprises a stop arm (205).

6. A lever apparatus as defined in claim 1, comprising an insert member (400, 401), wherein the insert member comprises:
a body having a splined outer surface (402, 403); and
an aperture (404, 405) that is shaped to receive a shaft (406, 407) of a valve.

7. A lever apparatus as defined in claim 6, wherein the aperture (404, 405) is shaped to receive a square shaft, a double-D type shaft, or a keyed connection type shaft.

8. A lever apparatus as defined in claim 6, wherein the shaft (406, 407) of the valve is a square stub shaft.

9. A lever apparatus as defined in claim 6, further comprising a fourth opening (224) having a third splined inner surface.

10. A lever apparatus as defined in claim 1, comprising an insert member (401), wherein the insert member has a conically-shaped body.

11. A rotary control valve apparatus, comprising:
a housing;
a valve mounted to the housing and having a shaft;
an actuator member disposed within the housing; and
a lever apparatus as defined in any one of the previous claims.

12. An rotary control valve apparatus as defined in claim 11, further comprising a flow control member (112) operatively coupled to the shaft.

## Patentansprüche

1. Hebelvorrichtung (200) zum Gebrauch mit einem Drehsteuerventil, aufweisend:
einen Hebelarm (202), der drehbar an einen Schaft (502) eines Aktuators zu montieren ist;
eine erste Öffnung (206), die eine erste verzahnte Innenfläche (208) zur Aufnahme eines verzahnten Ventilschafts (300) hat; und
eine zweite Öffnung (224, 225) angrenzend an die erste Öffnung, die eine zweite verzahnte Innenfläche (226, 227) hat, um mindestens einen Abschnitt eines Einsatzteiles (400, 401) aufzunehmen, welches eine verzahnte Außenfläche (402, 403) hat,
wobei die zweite Öffnung (224, 225) einen größeren Durchmesser als die erste Öffnung (206) hat.

2. Hebelanordnung nach Anspruch 1, die eine verzahnte Ventilwelle (302) hat, wobei die verzahnte Ventilwelle (302) in der ersten Öffnung (206) aufgenommen ist, die im Wesentlichen eine Presspassung oder Spielpassung hat.

3. Hebelvorrichtung nach Anspruch 2, wobei eine Klemmeinrichtung, die im Wesentlichen Presspassung oder Spielpassung zwischen dem verzahnten Ventilsitz (302) und der ersten Öffnung (206) liefert.

4. Hebelvorrichtung nach Anspruch 1, die ein Einsatzteil (400) aufweist, wobei das Einsatzteil einen zylindrisch geformten Körper hat.

5. Hebelvorrichtung nach Anspruch 1, wobei die Hebelvorrichtung weiter einen Anschlagarm (205) aufweist.

6. Hebelvorrichtung nach Anspruch 1, aufweisend ein Einsatzteil (400, 401), wobei das Einsatzteil aufweist:
einen Körper mit einer verzahnten Außenfläche (402, 403) und
eine Öffnung (404, 405), die so geformt ist, dass sie einen Schaft (406, 407) eines Ventils aufnimmt.

7. Hebelvorrichtung nach Anspruch 6, wobei die Öffnung (404, 405) so geformt ist, dass sie einen quadratischen Schaft, einen Schaft vom Doppel-D-Typ oder einen Schaft vom Typ der verkeilten Verbindung aufnimmt.

8. Hebelvorrichtung nach Anspruch 6, wobei der Schaft (406, 407) des Ventils ein Schaft mit quadratischem Stumpf ist.

9. Hebelvorrichtung nach Anspruch 6, weiter aufweisend eine vierte Öffnung (224), die eine dritte verzahnte Innenfläche hat.

10. Hebelvorrichtung nach Anspruch 1, welche ein Einsatzteil (401) aufweist, wobei das Einsatzteil einen konisch geformten Körper hat.

11. Drehsteuerventilvorrichtung, welche aufweist:
ein Gehäuse;
ein am Gehäuse montiertes Ventil, welches einen Schaft hat;
ein innerhalb des Gehäuses angeordnetes Aktuatorelement und
eine Hebelvorrichtung nach einem der vorangehenden Ansprüche.

12. Drehsteuerventilvorrichtung nach Anspruch 11, weiter aufweisend ein Flusssteuerelement (112), welches wirkungsmäßig an den Schaft gekoppelt ist.

## Revendications

1. Appareil à levier (200) à utiliser avec une valve de commande rotative, comprenant :
un bras de levier (202) destiné à être monté de façon rotative sur une tige (502) d'un actionneur ;
une première ouverture (206) ayant une première surface intérieure cannelée (208) pour recevoir un arbre de valve cannelé (300) ; et
une seconde ouverture (224, 225) adjacente à la première ouverture et ayant une seconde surface intérieure cannelée (226, 227) pour recevoir au moins une portion d'un élément d'insert (400, 401) ayant une surface extérieure cannelée (402, 403),
dans lequel la seconde ouverture (224, 225) a un diamètre plus grand que la première ouverture (206).

2. Appareil à levier selon la revendication 1, comprenant un arbre de valve cannelé (302), dans lequel l'arbre de valve cannelé (302) est reçu dans la première ouverture (206) avec un montage sensiblement serré ou un montage avec jeu.

3. Appareil à levier selon la revendication 2, dans lequel un moyen de serrage assure le montage sensiblement serré ou le montage avec jeu entre l'arbre de valve cannelé (302) et la première ouverture (206).

4. Appareil à levier selon la revendication 1, comprenant un élément d'insert (400), dans lequel l'élément d'insert a un corps de forme cylindrique.

5. Appareil à levier selon la revendication 1, dans lequel l'appareil à levier comprend en outre un bras d'arrêt (205).

6. Appareil à levier selon la revendication, comprenant un élément d'insert (400, 401), dans lequel l'élément d'insert comprend :
un corps ayant une surface extérieure cannelée (402, 403) ; et
une ouverture (404, 405) qui est conformée pour recevoir un arbre (406, 407) d'une valve.

7. Appareil à levier selon la revendication 6, dans lequel l'ouverture (404, 405) est conformée pour recevoir un arbre carré, un arbre du type en double-D, ou un arbre du type à connexion clavetée.

8. Appareil à levier selon la revendication 6, dans lequel l'arbre (406, 407) de la valve est un moignon d'arbre carré.

9. Appareil à levier selon la revendication 6, comprenant en outre une quatrième ouverture (224) ayant une troisième surface intérieure cannelée.

10. Appareil à levier selon la revendication 1, comprenant un élément d'insert (401), dans lequel l'élément d'insert a un corps de forme conique.

11. Appareil à valve de commande rotative, comprenant :
un boîtier ;
une valve montée sur le boîtier et ayant un arbre ;
un élément actionneur disposé à l'intérieur du boîtier ; et
un appareil à levier tel que défini dans l'une quelconque des revendications précédentes.

12. Appareil à valve de commande rotative selon la revendication 11, comprenant en outre un élément de commande d'écoulement (112) fonctionnellement couplé à l'arbre.
